Europäisches Patentamt

European Patent Office

Office européen des brevets

(11) Veröffentlichungsnummer: **0 287 993**
**A2**

(12) # EUROPÄISCHE PATENTANMELDUNG

(21) Anmeldenummer: 88106149.3

(22) Anmeldetag: 18.04.88

(51) Int. Cl.⁴: **B60R 16/02 , B60R 1/04**

(30) Priorität: 18.04.87 DE 3713218

(43) Veröffentlichungstag der Anmeldung:
26.10.88 Patentblatt 88/43

(84) Benannte Vertragsstaaten:
DE ES FR GB IT SE

(71) Anmelder: **BAYERISCHE MOTOREN WERKE
Aktiengesellschaft
Postfach 40 02 40 Petuelring 130 - AJ-36
D-8000 München 40(DE)**

(72) Erfinder: **Krist, Peter
Kazböckstrasse 4
D-8900 Augsburg(DE)**

(54) Verfahren zum Bestimmen der Augen- und/oder Kopfposition eines Fahrzeug-Benutzers und Vorrichtung zur Duchführung des Verfahrens.

(57) Bei einem Verfahren zum Bestimmen der Augen-und/oder Kopfposition eines Fahrzeug-Benutzers wird die Position auf der Basis der Einstellparameter eines Rückblickspiegels bestimmt. Aus den weiteren konstruktiven Gegebenheiten des Fahrzeugs läßt sich damit die Position ohne weiteres und ohne besonderen Aufwand bestimmen und einer geeigneten Einrichtung für den jeweiligen Anwendungsfall, wie virtuelle Anzeigen oder Blendschutzvorrichtungen zuleiten.

Fig. 1

## Verfahren zum Bestimmen der Augen-und/oder Kopfposition eines Fahrzeug-Benutzers und Vorrichtung zur Durchführung des Verfahrens.

Die Erfindung bezieht sich auf ein Verfahren zur Bestimmung der Augen-und/oder Kopfposition eines Fahrzeugbenutzers sowie eine zugehörige Vorrichtung.

Ein derartiges Verfahren ist Grundlage für die Erhöhung des Komforts bzw. als Sicherheitsmerkmal für Fahrzeuge unerläßlich. Es ist in Verbindung beispielsweise mit virtuellen Anzeigen oder als Basis für eine Blendschutzeinrichtung von besonderer Bedeutung.

Bei virtuellen Anzeigen wird ein virtuelles, die entsprechenden Informationen enthaltendes Bild dem Fahrzeug-Benutzer über eine entsprechende Optik z.B. in die Frontscheibe eingespiegelt. Die Erzeugung kann mit Hilfe konventioneller optischer Einrichtungen wie Glaslinsen oder dgl. oder auch mit Hilfe holographischer Elemente erfolgen.

Die Blendschutzeinrichtung kann auf unterschiedliche Weise gestaltet sein und dient stets dazu, Streulicht entgegenkommender Fahrzeuge oder anderer Lichtquellen durch entsprechende Verdunkelung, beispielsweise der Windschutzscheibe oder durch Steuerung von zusätzlichen Blendschutzelementen in dem zum Fahrzeug-Benutzer hin verlaufenden StrahlEngang zu steuern. Bei jedem Anwendungsfall können dann die entsprechenden Anzeigen bzw. Einrichtungen wirkungsvoll und ohne unerwünschte Nebeneffekte gesteuert werden.

Aus der DE-OS 31 38 712 ist ein Verfahren der eingangs genannten Art und eine zugehörige Vorrichtung bekannt, bei denen die gesuchte Position aus der Stellung der Teile eines Fahrzeugsitzes berechnet wird. Hierzu sind mehrere Werte, z.B. für die Längsstellung des Sitzes, die Neigung der Rückenlehne und die Höhenlage der Nackenstütze erforderlich, aus denen mit Hilfe eines Rechners die gesuchte Position bestimmt wird. Dieses Verfahren ist aufwendig, da hier zumindest drei Werte erforderlich sind. Es ist auch ungenau, da zumindest einer der Werte, nämlich der für die Nackenstütze, aufgrund der häufig falschen Einstellung nicht richtig ist.

Der Erfindung liegt die Aufgabe zugrunde, ein Verfahren der eingangs genannten Art zu schaffen, das auf besonders einfache Weise eine gute Bestimmung der Augen-und/oder Kopfposition eines Fahrzeug-Benutzers ermöglicht sowie eine konstruktiv einfache Vorrichtung für dieses Verfahren anzugeben.

Die Erfindung löst diese Aufgabe für das Verfahren durch die kennzeichnenden Merkmale das Patentanspruchs 1.

Der Rückblickspiegel wird vor bzw. während der Benutzung des Fahrzeugs vom Fahrer bzw. von einer zugeordneten Einstellelektronik so positioniert, daß er effizient arbeitet. Das heißt, er wird so eingestellt, daß das von ihm entworfene rückwärtige Bild für den Fahrzeug-Benutzer optimal ist. Als Einstellhilfe für den Fahrer kann dabei im Falle eines Innenrückblickspiegels eine Marke integriert sein, z.B. ein kleines Fadenkreuz, die sich bei bei korrekter Einstellung mit einer zweiten Marke in der Heckscheibe deckt.

Aus den Einstellparametern des Rückblickspiegels ergibt sich aufgrund der optischen Eigenschaften des Spiegels ein Bestimmungsstrahl, auf dem bzw. in dessen unmittelbarer Nähe die Augen des Fahrzeug-Benutzers liegen.

Als eine weitere Bestimmungsgröße für die Augenposition dient die sich durch die Anordnung des Fahrzeugsitzes ergebende Sitz-Mittelebene, die in Längsrichtung des Fahrzeugs verläuft und deren Normale senkrecht zur Längs-und zur Hochachse des Fahrzeugs liegt. Die Lage dieser Ebene ist aber von vorneherein bekannt und hängt nicht vom jeweiligen Fahrzeug-Benutzer ab. Sie ist vielmehr ein Konstruktionselement des Fahrzeugs, das beispielsweise durch die Lage der Sitzschienen vorgegeben ist. Alternativ dazu kann als weitere Bestimmungsgröße auch die Einstellung eines weiteren Rückblickspielgels verwendet werden.

Verbesserungen des erfindungsgemäßen Verfahrens sind auf unterschiedliche Weise möglich. Sie sind Gegenstand der Patentansprüche 2 bis 4. So beinhaltet die im Patentanspruch 2 beschriebene Verwendung eines innenrückblickspiegels eine besonders exakte Aussage über die Augenposition, da der Innenrückblickspiegel in der Regel eine höhere Vergrößerung bzw. geringere Verkleinerung als ein Außenrückblickspiegel besitzt und er besonders exakt an die jeweilige Augenposition des Fahrzeugbenutzers angepaßt ist.

Die alternativ oder zusätzlich vorgesehene Berücksichtigung der Parameter eines Außenrückblickspiegels, wie sie bereits oben erwähnt und Gegenstand des Patentanspruchs 3 ist, bietet demgegenüber andererseits den Vorteil, daß derartige Außenrückblickspiegel in der Regel motorisch verstellt werden und aus den Parametern, die sich aus dieser Einstellung des Außenrückblickspiegels ergeben, eine exakte Bestimmung der Außenposition ohne zusätzliche Verwendung besonderer Sensoren für die Einstellung des Außenrückblickspiegels herleitbar sind.

Wie bereits erwähnt, können die Parameter, aus denen die gesuchte Position aufgrund einfacher geometrischer Überlegungen bestimmbar ist, mit Hilfe von ggf. vorhandenen Steuerelementen bzw. ohnehin vorhandenen Sensoen für die Ausrüstungsbauteile des Kraftfahrzeugs, Außenrückblickspiegel und Fahrzeugsitz, gewonnen werden. Auch ohne derartige, von vornehrein vorhandenen Einrichtungen ist es aber auch möglich, mit geringem Aufwand die gewünschten Informationen zu erhalten. Hierzu kann ein in der Regel sehr störunanfälliges Potentiometer mit zwei Freiheitsgeraden verwendet werden, das die Einstellungen des jeweiligen Rückblickspiegels aufnimmt und an eine geeignete Steuereinheit für den jeweiligen Anwendungsfall weitergibt.

In einer derartigen Steuereinheit können die gewünschten Einstellwerte für die jeweiligen Teile, wie z.B. die Höhenstellung eines Sicherheitsgurt-Umlenkpunktes, die Einstellung von Luftführungsdüsen einer Heiz-/Klimaanlage und weiteres, wie es z.B. auch aus der eingangs genannten DE-OS 31 38 712 hervorgeht, z.B. aus Tabellen entnommen und in entsprechende Vorgaben für Einstellelemente dieser Teile umgesetzt werden.

Auch ist es möglich, auf der Basis der Einstellparameter des Rückblickspiegels eine Fahrzeugbenutzeridentifikation vorzunehmen und entsprechend gespeicherte Einstellwerte analog den bekannten Memory-Einrichtungen abzurufen. Gegenüber derartigen bekannten Einrichtungen entfällt dann eine individuelle und verwechslungsfähige manuelle Wahl der gespeicherten Einstellwerte.

In der Zeichnung sind die wesentlichen Elemente der Erfindung überwiegend schematisch dargestellt. Es zeigt

Fig. 1 ein Blockschaltbild für ein Ausführungsbeispiel der Erfindung und die

Fig. 2 bis 4 jeweils eine Darstellung zur Erläuterung der geometrischen Verhältnisse, wie sie im Rahmen der Erfindung von Bedeutung sind.

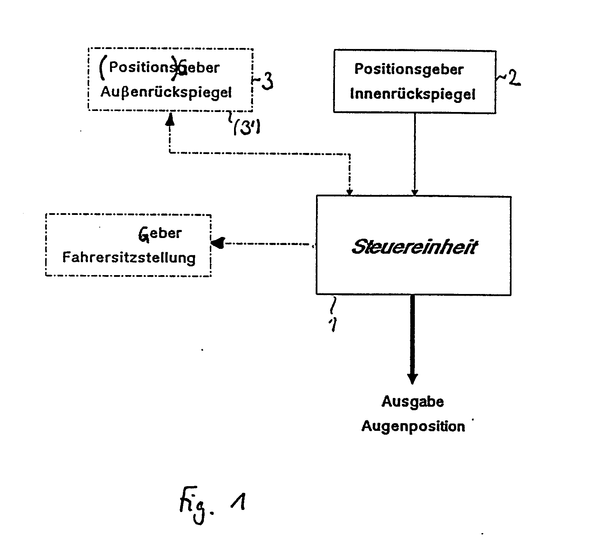

Beim Blockchaltbild von Fig. 1 ist einer zentralen Steuereinheit 1 die mit Hilfe eines nicht im einzelnen dargestellten Positionsgeber 2 ermittelte Einstelung eines ebenfalls nicht gezeigten Innenrückblickspiegels hinsichtlich seiner beiden Einstell-Freiheitsgrade zugeführt. Bei einem derartigen Positionsgeber kann es sich beispielsweise um ein zweiaxiales Potentiometer handeln. Aufgrund der geometrischen und konstruktiven Verhältnisse und der optischen Eigenschaften eines Spiegels ergibt sich daraus ohne weiteres die Augen-bzw. Kopfposition des Fahrzeugbenutzers. Ergänzend kann mit Hilfe gesonderter Positionsgeber 3 die Position eines Außenrückblickspiegels, die in analoger Weise bestimmt wird, als Bestimmungsgröße für die gesuchte Position der Augen-bzw. des Kopfes des Fahrzeugbenutzers an die Steuereinheit 1 eingegeben werden.

Die Steuereinheit 1 bestimmt nun aufgrund gespeicherter Werte bzw. vorgegebener Algorithmen die Einstellwerte für Teile des Kraftfahrzeugs, bei denen es sich um so verschiedene Teile wie Luftführungsdüsen, Fahrzeugsitz bzw. Sitzteile handeln kann. Auch ist es möglich, die Stellung eines weiteren Außenrückblickspiegels bzw. beider Außenrückblickspiegel einzustellen. In diesem Fall wird lediglich die mit dem Positionsgeber 2 ermittelte Lage des Innenrückblickspiegels verwendet und die der (des) Außenrückblickspiegel(s) entsprechend eingestellt. Hierzu dient ein schematisch dargestellter Geber 3' für einen oder beide Außenrückblickspiegel. Bei den gespeicherten Werten kann es sich um Werte handeln, die aufgrund von fahrerunabhängigen Tabellen fest vorgegeben sind bzw. um Werte, die im Rahmen eines vorangegangenen Lernmodus fahrerindividuell festgehalten werden.

Die unterschiedliche Berücksichtigung der tatsächlichen oder der einzustellenden Lage des Außenrückblickspiegels im Hinblick auf die Augen-bzw. Kopfposition hängt davon ab, ob eine weitere Bestimmunngsgröße für die Augen-bzw. Kopfposition verwendet wird. Dabei kann es sich vorzugsweise um die durch die Anordnung des Fahrzeugsitzes sich ergebende Sitz-Mittelebene m handeln, die beispielsweise durch die Lage der Sitzschienen des Fahzeugsitzes festgelegt ist. Wird dieses konstruktive und fahrerunabhängige Merkmal verwendet, so kann aus der Position des Innenrückblickspiegels (Positionsgeber 2) die Einstellung des (der) Außenrückblickspiegel vorgegeben werden (3'). Anderenfalls kann aus der Einstellung des Außenrückblickspiegels (3) erst die Kopf-und/oder Augenposition des Fahrzeugbenutzers bestimmt werden.

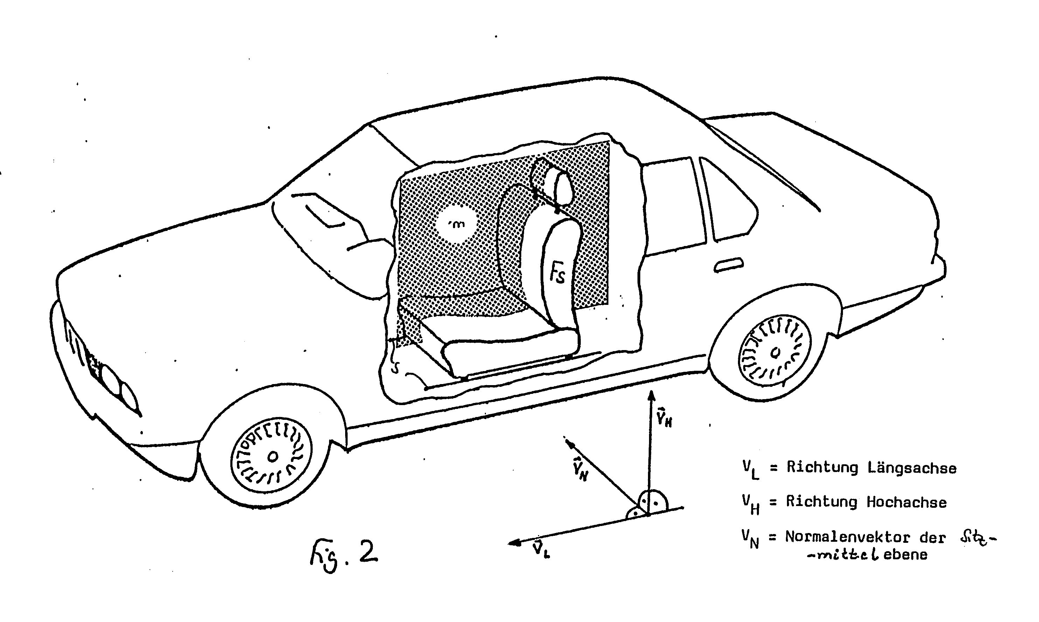

Diese Mittelebene m ist in Fig. 2 gezeigt und verläuft durch die Mittellinie der beiden Sitzschienen s des Fahrzeugsitzes Fs. Sie wird aufgespannt durch die Vektoren $V_H$ , $V_L$ für die Hochachse bzw. die Längsachse des Kraftfahrzeugs und besitzt die normale $V_N$.

Wird die Lage der Sitz-Mittelebene m hingegen nicht berücksichtigt, so ist die Berücksichtigung der Position beispielsweise des Außenrückblickspiegels erforderlich. Aus der Position der beiden berücksichtigten Spiegel ergibt sich dann analog der bekannten Kreuzpeilung die Lage der Augen bzw. des Kopfes des Fahrzeugbenutzers.

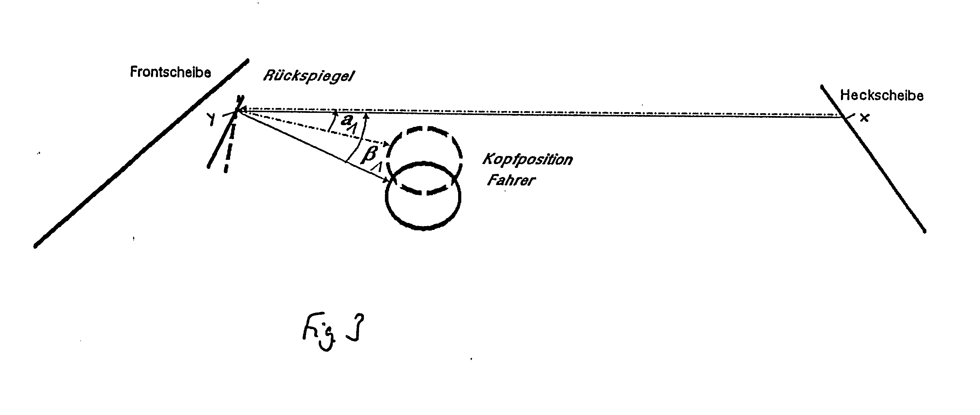

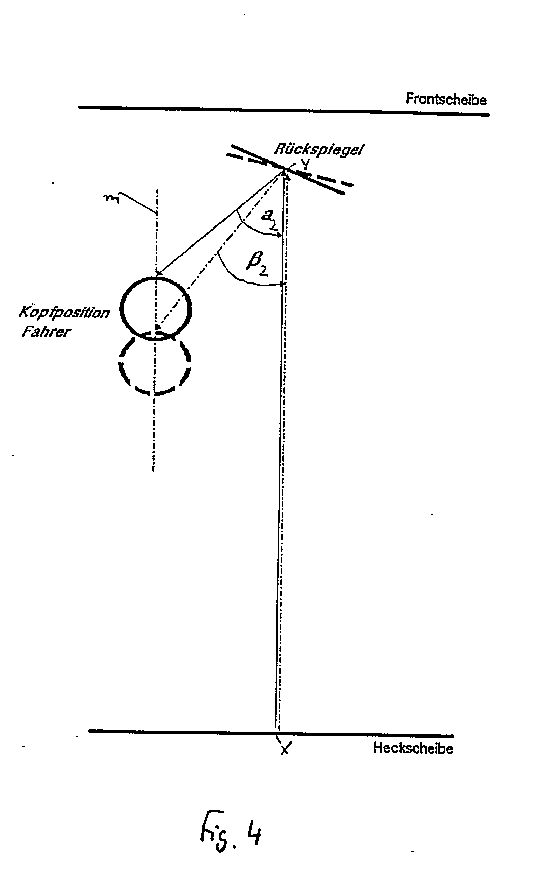

Der Zusammenhang zwischen der Lage der Augen bzw. des Kopfes des Fahrzeugbenutzers und der Einstellung des Rück(blick-)spiegels ist in den Fig. 3 und 4 gezeigt. Dabei ergibt sich aus Fig. 3 der Zusammenhang zwischen der Höhenlage des Kopfes bzw. der Augen und der Drehlage des Rückblickspiegels bezogen auf eine Achse parallel zum Normalenvektor $V_N$ der Sitz-Mittelebene m (Fig. 2) und aus Fig. 4 der Zusammenhang zwischen der Längslage und der Drehlage des Rückblickspiegels in Bezug auf eine Achse parallel zur Hochachse $V_H$ des Fahrzeugs.

Zusätzlich ist in den Fig. 3 und 5 die Front-und die Heckscheibe eingezeichnet. Deutlich ist zu erkennen, daß die beispielsweise durch Winkel $a_1$ bzw. $b_1$ sowie $a_2$ bzw. $b_2$ angegebene Drehlage des Rückblickspiegels deutlich von der Kopf-bzw. Augenposition des Fahrers abhängt. Es ist damit möglich, die Augenposition aus der Lage des Innenrückblickspiegels eindeutig zu entnehmen.

Ergänzend kann innerhalb des Rückblickspiegels, beispielsweise deckungsgleich mit dem Schnittpunkt seiner beiden Drehachsen ein Fadenkreuz (y) oder dgl. als Peilmittel angeordnet sein, das mit einer weiteren Markierung (x) innerhalb der Heckscheibe, beispielsweise einem Punkt oder dgl. zur Deckung zu bringen ist. Ist dies erfolgt, so befindet sich der Rückblickspiegel in der bezüglich des Fahrzeugbenutzers idealen Position. Seine Einstellparamter wiederum lassen dann - in Verbindung mit einer weiteren Bezugsgröße wie Lage der Sitz-Mittelebene m bzw. der Einstellparameter eines weiteren Rückblickspiegels - eine eindeutige Bestimmung der Kopf-bzw. Augenposition des Fahrzeugbenutzers zu.

## Ansprüche

1. Verfahren zum Bestimmen der Augen- und/oder Kopfposition eines Fahrzeug-Benutzers, dadurch gekennzeichnet, daß die Position auf der Basis der Einstellparameter eines Rückblickspiegels bestimmt wird.

2. Verfahren nach Anspruch 1, gekennzeichnet durch Verwendung der Einstellparameter eines Innenrückblickspiegels.

3. Verfahren nach Anspruch 1 oder 2, gekennzeichnet durch Verwendung der Einstellparameter eines Außenrückblickspiegels.

4. Vorrichtung zur Durchführung des Verfahrens nach einem der Ansprüche 1 bis 3, gekennzeichnet durch ein dem Rückblickspiegel zugeordnetes Potentiometer mit zwei Freiheitsgeraden, das die Einstellparameter des Rückblickspiegels detektiert.

5. Vorrichtung zur Durchführung des Verfahrens nach einem der Ansprüche 1 bis 4, gekennzeichnet durch eine Markierung in einem Rückblickspiegel, die mit einer zugehörigen Markierung in einer Heckscheibe bei ordnungsgemäßer Justierung des Innenrückblickspiegels deckungsgleich ist.

Positionsgeber
Außenrückspiegel ⌐3

(3')

Positionsgeber
Innenrückspiegel ~2

Geber
Fahrersitzstellung

Steuereinheit

1

Ausgabe
Augenposition

Fig. 1

Fig. 2

$V_L$ = Richtung Längsachse

$V_H$ = Richtung Hochachse

$V_N$ = Normalenvektor der Sitz-
   -mittelebene

Frontscheibe    Rückspiegel    Heckscheibe

y    x

$a_1$

$\beta_1$

Kopfposition
Fahrer

Fig 3

0 287 993

Frontscheibe

Rückspiegel

Kopfposition
Fahrer

$a_2$

$\beta_2$

m

Y

X

Heckscheibe

Fig. 4